# FASCICULE DE BREVET EUROPEEN

(11) **EP 0 896 181 B1**
(45) Date de publication et mention de la délivrance du brevet: **26.01.2005**
(21) Numéro de dépôt: 98401994.3
(22) Date de dépôt: 05.08.1998
(51) Int. Cl.: F16L 21/03, F16L 21/035

(54) **Procédé de réalisation d'un joint, notamment étanche, entre deux pièces, notamment deux tuyaux ou analogues, ensemble obtenu et pièce servant à la mise en oeuvre de ce procédé**
Verfahren und Vorrichtung zum Herstellen einer dichten Verbindung zwischen zwei Rohren
Method and device for producing a sealed connection between two pipes

(30) Priorité: 06.08.1997 FR 9710089
(43) Date de publication de la demande: 10.02.1999
(73) Titulaire: Bonna Sabla, 92800 Puteaux (FR)
(72) Inventeur: Leblanc, François, 92000 Nanterre (FR)
(74) Mandataire: Texier, Christian

(56) Documents cités:
- FR-A- 2 504 636
- FR-A- 2 701 527
- US-A- 5 626 349

## Description

La présente invention concerne un procédé de réalisation d'un joint, notamment étanche, entre des première et deuxième pièces, notamment deux tuyaux ou analogues, assemblées mutuellement par translation relative suivant une direction longitudinale déterminée et présentant respectivement une première ou deuxième surface longitudinale de recouvrement mutuel, les première et deuxième surfaces étant placées en regard l'une de l'autre, approximativement parallèlement entre elles, dans une position relative déterminée des première et deuxième pièces, résultant de leur assemblage mutuel, et au moins la deuxième surface étant rugueuse, notamment définie par un matériau poreux tel que du béton, ledit procédé comprenant les étapes consistant à, successivement :
a) monter et retenir sur la première surface une garniture, notamment d'étanchéité, d'un type élastiquement déformable en compression et en flexion, notamment en caoutchouc naturel ou synthétique, présentant une face d'attaque par la deuxième surface lors de l'assemblage mutuel des première et deuxième pièces,
b) assembler mutuellement les première et deuxième pièces par translation longitudinale relative jusqu'à ce que ladite position relative déterminée soit atteinte, en provoquant une déformation élastique de la garniture, en compression et/ou flexion, par appui de la deuxième surface sur la face d'attaque.

On considère ici comme rugueuse non seulement une seconde surface présentant des aspérités telles qu'elle soit rugueuse en apparence ou au toucher, mais également une seconde surface qui, tout en étant lisse en apparence et au toucher, présente vis-à-vis de la garniture un coefficient de frottement trop élevé pour autoriser un glissement relatif dans de bonnes conditions si le contact mutuel est direct.

On rencontre de telles conditions notamment lorsqu'il s'agit d'emboîter mutuellement, avec étanchéité, un about mâle d'un tuyau et un about femelle d'un autre tuyau, disposés sensiblement coaxialement, les deux surfaces en question étant alors constituées par une face périphérique extérieure de l'about mâle et une face périphérique intérieure de l'about femelle, l'une et l'autre approximativement cylindriques de révolution autour de l'axe commun, et généralement légèrement tronconiques afin de faciliter la fabrication ; selon les cas, la première surface, portant la garniture, à savoir dans ce cas une garniture d'étanchéité, peut être constituée soit par l'une, soit par l'autre de ces faces périphériques respectivement intérieure et extérieure.

Cet exemple n'est nullement limitatif mais on s'y référera par la suite, pour des raisons de simplicité.

Il y aura toutefois lieu de considérer comme analogues à des tuyaux, au regard de la présente invention, tous les conduits et éléments de construction assemblables par emboîtement tels que cadres, galeries, regards de visite, conduits emboîtables dits "ovoïdes", conduits du type commercialisé sous la marque enregistrée "MODULOVALE" et modules d'abris, ces exemples n'étant nullement limitatifs.

De même, bien que la présente invention trouve plus particulièrement son application dans le cas de l'assemblage, avec joint étanche, entre deux tuyaux ou analogues réalisés en béton, on ne sortira pas de son cadre en l'appliquant à des pièces autres que des tuyaux ou analogues et/ou réalisées en d'autres matériaux et/ou à des joints remplissant en complément ou en remplacement d'une fonction d'étanchéité au moins une autre fonction, à savoir notamment une fonction de positionnement transversal relatif et/ou une fonction d'amortissement ou de coupure dans la transmission de vibrations d'une pièce à l'autre, par le choix d'une garniture appropriée, entrant dans le cadre des aptitudes normales d'un Homme du métier.

De façon traditionnelle, lorsqu'on met en oeuvre le procédé indiqué en préambule, on prévoit de lubrifier la face d'attaque de la garniture, à savoir une garniture d'étanchéité dans l'exemple choisi, afin de limiter l'effort qu'il est nécessaire de développer pour déplacer l'une par rapport à l'autre la deuxième surface et la première surface portant la garniture et de permettre d'atteindre la position relative prédéterminée sans risque d'entraînement, voire d'endommagement, par friction, de la garniture par la deuxième surface.

Selon l'Art antérieur le plus ancien, et le plus fréquent, la garniture peut être certes montée sur la face périphérique extérieure de l'about mâle ou sur la face périphérique intérieure de l'about femelle en usine ou sur site, mais sa face d'attaque, généralement convexe et lisse, ne reçoit de lubrifiant que sur site, par enduction, immédiatement avant l'emboîtement mutuel, et on utilise à cet effet un lubrifiant fluide, c'est-à-dire liquide ou pâteux, tel que du savon. L'enduction ainsi pratiquée a l'inconvénient de prendre du temps sur site et, dans la mesure où on la réalise immédiatement avant l'emboîtement, notamment dans le souci d'éviter dans toute la mesure du possible une souillure du lubrifiant par de la terre, de la poussière ou des cailloux, elle s'effectue généralement dans des conditions particulièrement inconfortables, notamment en fond de fouille dans le cas de la pose de canalisations enterrées. En outre, la quantité de lubrifiant susceptible d'être retenue par simple enduction de la face d'attaque est nécessairement faible si le lubrifiant est liquide, et cette faible quantité est souvent balayée par celle des faces périphériques intérieure et extérieure précitées qui constitue la deuxième surface, lors de l'emboîtement, si bien que la lubrification ainsi obtenue est en fait peu efficace et que, notamment, les risques d'entraînement de la garniture par cette deuxième surface, pendant sa translation, sont importants.

Pour tenter de remédier à cet inconvénient, on a proposé une technique de joint pré-lubrifié, consistant à intégrer à la garniture, entre un corps de celle-ci et une pellicule rattachée à ce corps et définissant la face d'attaque, une poche emplie de lubrifiant fluide. La technique de fabrication de la garniture s'en trouve naturellement considérablement compliquée, et son coût accru. En outre :
- soit la pellicule est destinée à se déchirer pendant l'emboîtement, afin de libérer le lubrifiant, comme le décrit par exemple le brevet français N° 2 504 636, ce qui libère non seulement le lubrifiant, de façon favorable, mais également la pellicule déchirée, qui reste interposée de façon plus ou moins contrôlée entre le corps et la deuxième surface et peut ainsi être à l'origine d'un manque d'étanchéité dans l'application du corps sur la seconde surface, d'une part, ainsi que d'endommagements du corps, notamment par arrachement, d'autre part ; cette technique connue présente en outre l'inconvénient d'être pratiquement incompatible avec un réemboîtement mutuel des deux pièces après un déboîtement mutuel, par exemple s'il y a lieu de remédier à un défaut de positionnement relatif des pièces ;
- soit la pellicule est destinée à résister à l'arrachement, c'est-à-dire à retenir en permanence le lubrifiant à l'intérieur de la poche, la translation de la deuxième surface par rapport à la garniture pendant l'emboîtement étant facilitée par un glissement de la pellicule sur le corps par l'intermédiaire du lubrifiant avec roulement de la pellicule sur elle-même au niveau de ses raccordements avec le corps comme le propose la demande de brevet européen N° 0 011 919, ce qui évite les inconvénients précités à supposer que la pellicule ne se déchire effectivement pas mais présente l'inconvénient d'entraîner, et même de nécessiter en vue de l'étanchéité, comme ce serait également le cas pour toute autre fonction éventuellement dévolue à la garniture, la présence permanente du lubrifiant à l'intérieur de la garniture, ce qui peut poser un problème de tenue au vieillissement.

Pour remédier à ces inconvénients, la Demanderesse a proposé, dans sa demande de brevet français N° 2 701 527, une technique de joint auto-lubrifié consistant à aménager dans la garniture au moins une cavité débouchant dans la face d'attaque et propre à recevoir un lubrifiant fluide en l'absence de compression de la garniture d'étanchéité et à s'écraser pour chasser ce lubrifiant vers la face d'attaque lors de la compression de la garniture.

On peut ainsi pourvoir la garniture en une quantité de lubrifiant largement supérieure à celle que peuvent recevoir les garnitures conformes à l'Art antérieur le plus ancien, c'est-à-dire démunies de poche formant réserve de lubrifiant, et exploiter au mieux ce lubrifiant en le chassant progressivement de la garniture, pour approvisionner progressivement le contact entre la face d'attaque et la deuxième surface, au fur et à mesure de la translation de cette dernière, afin qu'en permanence, cette translation s'effectue avec lubification. Tout risque d'entraînement de la garniture par friction sur la deuxième surface est ainsi exclu.

Les risques inhérents aux garnitures comportant une poche de lubrifiant sont également exclus même si l'on peut prévoir aussi bien d'approvisionner la garniture en lubrifiant sur site que de l'approvisionner en lubrifiant en usine.

La fabrication de la garniture peut cependant rester simple et peu coûteuse, en tout cas beaucoup plus simple et beaucoup moins coûteuse que celle des garnitures à poche de lubrifiant.

Cependant, cette garniture conserve certains inconvénients de l'Art antérieur, inhérents à l'utilisation de lubrifiant fluide, en ce qu'elle nécessite la manipulation d'un tel lubrifiant, en ce que ce lubrifiant peut capter des poussières et cailloux notamment sur site avec pour conséquence des défaut de lubrification ou d'étanchéité, et en ce que ce lubrifiant peut présenter des lacunes au niveau desquelles le matériau constitutif de la garniture vient directement au contact de la deuxième surface, qui, même réalisée avec le plus grand soin, présente une rugosité telle qu'elle risque d'endommager la garniture lors de la translation relative des première et deuxième surfaces.

Le but de la présente invention est de remédier à ces inconvénients et, à cet effet, la présente invention propose un procédé du type indiqué en préambule, caractérisé par la combinaison des étapes supplémentaires consistant à, préalablement à l'étape b) :
c) revêtir d'une pellicule souple d'un matériau solide de glissement une zone superficielle de la garniture, ladite zone superficielle incluant au moins la face d'attaque,
d) imprégner d'un matériau de glaçage à l'état fluide, susceptible de faire prise et de durcir en formant une pellicule lisse, une zone de la deuxième surface incluant au moins la zone de celle-ci qui vient au contact de la face d'attaque lors de ladite translation longitudinale relative et dans ladite position relative déterminée, puis autoriser ou provoquer la prise et le durcissement du matériau de glaçage.

On entend ici par "matériau solide de glissement" un matériau solide connu pour présenter un faible coefficient de frottement vis-à-vis d'autres matériaux, comme ce peut être le cas du PTFE (polytétrafluoréthylène), bien que cet exemple ne soit nullement limitatif.

En d'autres termes, un aspect de la présente invention consiste à remplacer le lubrifiant fluide par un matériau solide de glissement présent en permanence sur l'intégralité de la zone superficielle de la garniture susceptible de venir au contact de la deuxième surface lors de la translation relative des deux pièces telles que deux tuyaux ou analogues, mais l'expérience a montré, de façon tout à fait surprenante, que la seule présence du matériau solide de glissement, pourtant comparable à une forme solide du lubrifiant, ne donnait pas satisfaction en elle-même dans la mesure où la deuxième surface, rugueuse même de façon imperceptible à la vue et au toucher, ripait sur le matériau solide de glissement au lieu de glisser sur lui comme c'était le cas lorsque, dans l'Art antérieur, on utilisait un lubrifiant fluide. C'est pourquoi la présente invention propose de combiner cette substitution d'un matériau solide de glissement au lubrifiant fluide de l'Art antérieur avec un glaçage, par imprégnation, de la zone de la deuxième surface ainsi destinée à venir au contact de la garniture, et l'expérience a montré que cette combinaison permettait d'obtenir de bons résultats, c'est-à-dire une bonne efficacité de la lubrification, constatée d'une part par une facilité de translation longitudinale relative des deux pièces lors de leur assemblage mutuel et d'autre part par l'absence de recul sensible de l'une des pièces par rapport à l'autre après leur assemblage, et une bonne étanchéité du joint obtenu lorsqu'il s'agissait de réaliser une telle étanchéité au moyen de la garniture.

La meilleure qualité de la lubrification, en termes de régularité et d'uniformité, constatée lors de la mise en oeuvre de la présente invention est particulièrement sensible si l'on se réfère à la technique traditionnelle de la lubrification à la pose des pièces, sur site, par rapport à laquelle la technique selon l'invention autorise en outre un gain de temps important à la pose et un travail dans des conditions beaucoup plus favorables, que ce soit pour l'application du matériau solide de glissement en atelier ou pour la pose des pièces sur site. Si l'on se réfère aux techniques plus récentes des joints pré-lubrifiés ou auto-lubrifiés, la mise en oeuvre de la présente invention permet de simplifier considérablement la garniture, ce qui réduit sa complexité et son coût de fabrication, la rend moins délicate à utiliser et évite les risques d'incident à l'emboîtement.

En effet, à la différence des techniques de lubrification par lubrifiant fluide incorporé dans la garniture, qui nécessitent des géométries spécifiques de celle-ci, par exemple du fait de la présence de lamelles ou pellicules aménagées dans le matériau constitutif de celle-ci, et des géométries d'abouts adaptées, la présente invention est applicable à des garnitures existantes sans modification de la géométrie de celles-ci ou de la géométrie des abouts ; en effet, l'imprégnation de la seconde surface ne modifie pas sa géométrie, et l'épaisseur de la pellicule de matériau lubrifiant solide sur la garniture entre dans les tolérances de cette dernière.

Ainsi, la garniture qui, conformément à la présente invention, reçoit la pellicule souple de matériau solide de glissement peut présenter par ailleurs toute conformation connue et, notamment, elle présentera le plus souvent une section courante cunéiforme, définie notamment par la face d'attaque et par une face d'appui sur la première surface. Cette face d'appui peut être lisse, si l'on adopte une immobilisation de la garniture par friction sur la première surface ou une solidarisation mutuelle sans ancrage mécanique, par exemple par collage, ou présenter une conformation d'ancrage mécanique par rapport à la première surface, par exemple sous forme de reliefs et/ou de creux, lorsqu'on prévoit une solidarisation avec imbrication mutuelle notamment par réalisation de la première surface, et plus précisément de la première pièce telle qu'un tuyau ou analogue qui la constitue, par moulage directement sur la garniture, selon des techniques connues d'un Homme du métier. La garniture pourra cependant également présenter une section courante circulaire et tendre ainsi à rouler sur la deuxième surface lors de l'assemblage mutuel des première et deuxième pièces, auquel cas l'ensemble de la surface sera de préférence considéré comme surface d'attaque.

Naturellement, les zones superficielles de la garniture et de la deuxième surface qui sont respectivement revêtue de la pellicule souple de matériau solide de glissement et imprégnée du matériau de glaçage doivent être suffisamment étendues pour prendre en compte les déformations, notamment en flexion, que la garniture subit lors de la translation relative des deux pièces, afin qu'en permanence, lors de cette translation relative et y compris lorsque la position relative déterminée des deux pièces est atteinte, le seul contact qui s'établisse entre la garniture et la deuxième surface ait lieu entre le matériau solide de glissement, d'une part, et le matériau de glaçage à l'état durci, d'autre part.

A cet effet, la pellicule de matériau solide de glissement peut couvrir intégralement la garniture, auquel cas elle peut être réalisée par exemple par trempage de celle-ci lors de l'étape c), comme ce peut être le cas notamment lorsque la garniture présente une section courante circulaire, mais, notamment lorsque la section courante de la garniture est telle que celle-ci présente une face d'attaque bien définie, on peut également prévoir que cette pellicule laisse dégagée une autre zone superficielle de la garniture, cette autre zone superficielle étant placée au contact de la première surface, c'est-à-dire comprenant au moins la face d'appui précitée, auquel cas on met de préférence en oeuvre l'étape c) par un procédé choisi dans un groupe comportant l'apposition d'une bande préfabriquée du matériau solide de glissement, la coextrusion avec la garniture et la pulvérisation sur celle-ci.

Ainsi, à titre d'exemple non limitatif, on a obtenu de bons résultats aux essais en mettant en oeuvre l'étape c) par application d'une bande de PTFE cru, collée sur une garniture en caoutchouc après préfabrication de celle-ci, mais, si cette dernière est réalisée par extrusion, une telle application pourrait également s'effectuer directement à la sortie de l'extrudeuse. On a également prévu de réaliser la pellicule de matériau solide de glissement sous forme d'une bande de PTFE cuit collée à l'état cuit sur la garniture en caoutchouc ou encore réalisée par cuisson d'une bande de PTFE cru appliquée sur la garniture au stade de la fabrication de celle-ci, par exemple par coextrusion, la cuisson du PTFE étant réalisée en même temps que la vulcanisation du caoutchouc et en utilisant les moyens mis en oeuvre pour cette vulcanisation.

Ces modes de réalisation ne constituent cependant que des exemples non limitatifs, puisque d'autres procédés de réalisation de la pellicule peuvent être prévus, tels que la pulvérisation sur la zone superficielle à traiter ou le trempage, comme il a été indiqué précédemment, et que l'on peut utiliser des matériaux solides de glissement autres que le PTFE. Dans tous les cas, de préférence, on conserve à la pellicule une épaisseur de l'ordre de quelques dixièmes de millimètres, au maximum, afin de conserver à la garniture la souplesse élastique du caoutchouc ou autre matériau analogue qui la constitue, de telle sorte que sa zone superficielle épouse au mieux les irrégularités de la seconde surface, notamment de façon à assurer l'étanchéité lorsque celle-ci est recherchée.

Le glaçage de la zone à traiter, sur la deuxième surface, peut également s'effectuer par divers moyens et l'on peut notamment prévoir de réaliser ce glaçage par imprégnation en surface du matériau constitutif tel que du béton au moyen d'une résine polymérisable choisie dans un groupe comportant les résines époxydes et acryliques, à l'état fluide, pour saturer ce matériau avec un léger excès permettant la réalisation d'une pellicule qui, après prise et durcissement, réalise le glaçage requis ; il est possible d'améliorer le glaçage obtenu en intervenant sur les caractéristiques de tension superficielle de la résine à l'état fluide et en début de polymérisation. On peut également réaliser ce glaçage par application, sur la zone à traiter de la seconde surface, d'un produit connu comme produit "anti-graffiti".

Naturellement, lorsque les première et deuxième pièces sont des tuyaux ou analogues dont un about définit respectivement la première ou deuxième surface, qui présente alors une forme annulaire, la garniture et la pellicule de matériau lubrifiant solide présentent la forme respective d'une bague annulaire continue.

Dans la mesure où la mise en oeuvre du procédé selon l'invention se traduit par la présence de dispositions originales sur l'une et l'autre des pièces ainsi que sur l'ensemble formé par ces deux pièces et le joint notamment étanche, la présente invention s'étend à l'ensemble de deux pièces et d'un joint tel qu'obtenu par la mise en oeuvre du procédé selon l'invention, ainsi qu'à une pièce comportant soit une première surface et une garniture, notamment d'étanchéité, soit une deuxième surface et une imprégnation de celle-ci, ces pièces étant telles qu'elles se présentent du fait de la mise en oeuvre ou du procédé selon l'invention.

Ainsi, la présente invention s'étend à une pièce pour la mise en oeuvre du procédé selon l'invention, notamment un tuyau ou analogue, présentant une première surface longitudinale de recouvrement d'une deuxième surface longitudinale d'une autre pièce, notamment un tuyau ou analogue, ladite première surface portant solidairement une garniture, notamment d'étanchéité, d'un type élastiquement déformable en compression et/ou en flexion, notamment en caoutchouc naturel ou synthétique, présentant une face d'attaque par la deuxième surface lors d'une translation longitudinale relative d'assemblage mutuel des deux pièces, et susceptible de se déformer élastiquement, cette pièce étant caractérisée en ce qu'une zone superficielle de garniture, ladite zone superficielle incluant au moins la face d'attaque, est revêtue d'une pellicule souple d'un matériau solide de glissement.

Selon des modes de réalisation préférés de cette pièce :
- ladite pellicule laisse dégagée une autre zone superficielle de la garniture, ladite autre zone superficielle étant placée au contact de la première surface, ou bien ladite pellicule couvre intégralement la garniture,
- la garniture est retenue sur la première surface par un procédé choisi dans un groupe comportant l'immobilisation par friction, l'ancrage mécanique et le collage,
- le matériau solide de glissement est choisi dans un groupe comportant le PTFE, et la pellicule présente une épaisseur de l'ordre de quelques dixièmes de millimètre au maximum,
- cette pièce est un tuyau ou analogue dont un about définit la première surface, qui présente une forme annulaire, et la garniture et la pellicule de matériau solide de glissement présentent la forme respective d'une bague annulaire continue.

En outre, la présente invention s'étend à une pièce pour la mise en oeuvre du procédé selon l'invention, notamment un tuyau ou analogue présentant une deuxième surface longitudinale de recouvrement d'une première surface longitudinale d'une autre pièce, notamment un tuyau ou analogue, au moins la deuxième surface étant rugueuse, notamment définie par un matériau poreux tel que du béton, et apte à venir en appui sur une face d'attaque d'une garniture, notamment d'étanchéité, portée solidairement par la première surface lors d'une translation longitudinale relative d'assemblage mutuel des deux pièces, cette pièce étant caractérisée en ce qu'une zone de la deuxième surface incluant au moins la zone de celle-ci qui vient au contact de la première surface est imprégnée d'un matériau de glaçage formant une pellicule lisse et dure.

Selon des modes de réalisation préférés de cette pièce :
- le matériau de glaçage est une résine polymérisable choisie dans un groupe comportant les résines époxydes et acryliques,
- ladite zone de la deuxième surface est imprégnée à saturation du matériau de glaçage formant la pellicule lisse et dure,
- cette pièce est un tuyau ou analogue dont un about définit la deuxième surface, qui présente une forme annulaire.

D'autres caractéristiques et avantages de ces différents aspects de l'invention ressortiront de la description ci-dessous, relative à quelques exemples non limitatifs de mise en oeuvre, ainsi que des dessins annexés qui font partie intégrante de cette description.

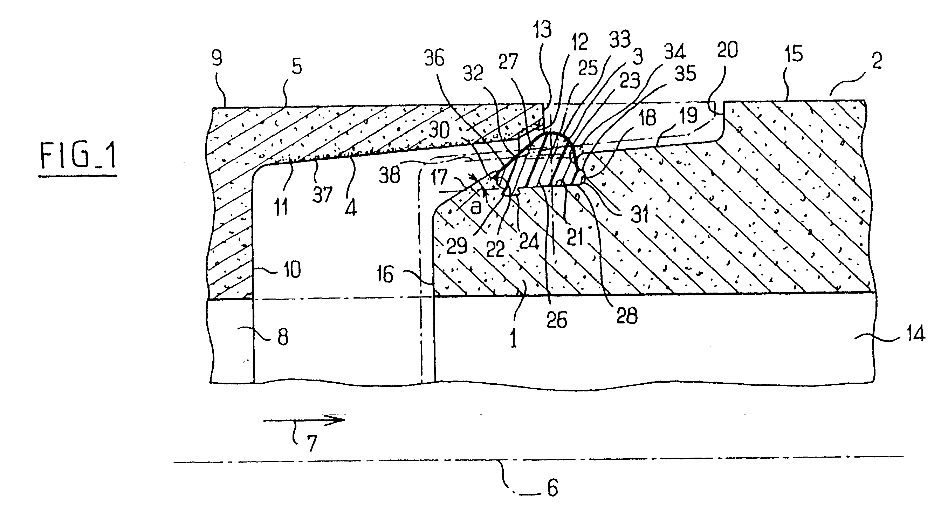

- La figure 1 illustre la mise en oeuvre du procédé selon l'invention pour assurer l'étanchéité de l'emboîtement mutuel, coaxial, de deux tuyaux, par exemple en béton armé, dont l'un présente à cet effet un about mâle, muni d'une garniture d'étanchéité intégrée au moulage, et dont l'autre présente à cet effet un about femelle, les deux tuyaux étant illustrés principalement dans un état immédiatement préalable à l'emboîtement, alors qu'ils sont coaxiaux, en une vue en coupe par leur axe commun.

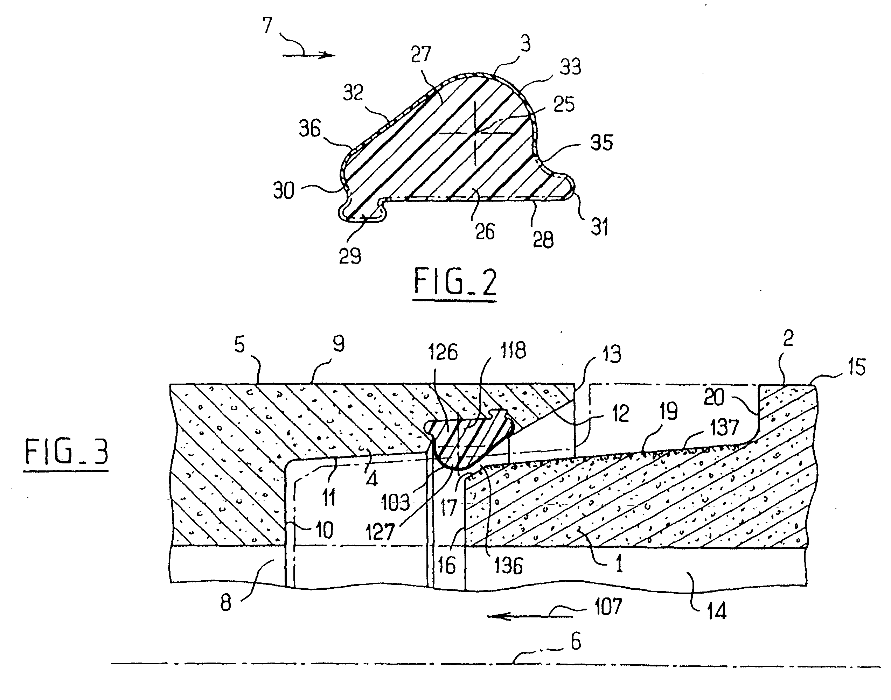

- La figure 2 montre la garniture d'étanchéité en une même vue en coupe mais à plus grande échelle qu'à la figure 1.
- La figure 3 illustre, en une vue analogue à celle de la figure 1, le cas du positionnement de la garniture d'étanchéité non plus sur l'about mâle mais à l'intérieur de l'about femelle, la garniture d'étanchéité présentant par ailleurs une conformation analogue à celle qui est illustrée aux figures 1 et 2.

Naturellement, bien que la mise en oeuvre de l'invention soit décrite en relation avec l'application à l'étanchéification de l'emboîtement mutuel de deux tuyaux, on peut réaliser un joint selon l'invention dans d'autres types d'application, notamment chaque fois qu'il y a lieu d'emboîter mutuellement, avec étanchéité, deux conduits ou autres éléments de construction analogues à des tuyaux, ou encore d'autres pièces, et/ou attribuer au joint des fonctions autres que la fonction d'étanchéification et en particulier une fonction de positionnement relatif des deux pièces en direction transversale, c'est-à-dire une fonction de centrage mutuel dans le cas de tuyaux ou analogues, et/ou une fonction d'amortissement ou de coupure de transmission mécanique de vibrations d'une pièce à l'autre, comme on l'a indiqué en préambule. On observera d'ailleurs que, dans l'application décrite, la garniture utilisée pour assurer l'étanchéité de l'emboîture des deux tuyaux peut avantageusement assurer en outre une fonction de centrage mutuel et une fonction d'isolation mutuelle à l'encontre de la propagation de vibrations.

On se réfèrera en premier lieu à la figure 1, où l'on a illustré l'emboîtement d'un about mâle 1 d'un tuyau 2, par exemple en béton armé, portant une garniture d'étanchéité 3, dans un about femelle 4 d'un autre tuyau 5, par exemple également en béton armé, quant à lui démuni de garniture d'étanchéité. Les tuyaux 2 et 5, notamment au niveau de leurs abouts 1, 4, et la garniture d'étanchéité 3 présentent une symétrie de révolution autour d'un même axe 6, ou d'axes respectifs approximativement confondus, dans un état immédiatement préalable à l'emboîtement, illustré en trait plein, comme dans un état final d'emboîtement, illustré en trait mixte. Pour réaliser cet emboîtement, les deux tuyaux 2 et 5 peuvent être déplacés coaxialement l'un vers l'autre ou l'un d'entre eux peut être déplacé coaxialement par rapport à l'autre ; quelle que soit la solution adoptée, elle se traduit par une translation du tuyau 5 démuni de garniture d'étanchéité, c'est-à-dire ici le tuyau comportant l'about femelle 4, dans un sens 7, parallèle à l'axe 6, par rapport au tuyau 2 portant la garniture d'étanchéité 3, c'est-à-dire le tuyau 2 comportant l'about mâle 1, et par rapport à cette garniture d'étanchéité 3 ; l'about femelle 4 et l'about mâle 1 sont tournés respectivement vers l'aval et vers l'amont en référence au sens 7.

Naturellement, dans la mesure où l'invention peut trouver également son application dans le cas de tuyaux ou analogues présentant des sections non circulaires, en référence à leur axe, ou encore de pièces ne définissant pas une périphérie fermée, telles que des plaques planes ou cintrées, raccordées mutuellement par un bord, la garniture d'étanchéité 3 présente dans chaque cas une conformation adaptée, comme le comprendra aisément un Homme du métier ; toutefois, l'invention sera décrite par la suite en référence à des tuyaux 2 et 5, ainsi qu'à une garniture d'étanchéité 3, présentant une symétrie de révolution autour d'un même axe, à savoir l'axe 6.

Pour permettre l'emboîtement, dans l'exemple illustré, l'about femelle 4 présente, entre des faces périphériques respectivement intérieure 8 et extérieure 9 du tuyau 5, l'une et l'autre cylindriques de révolution autour de l'axe 6 :
- un épaulement annulaire 10 plan, perpendiculaire à l'axe 6, tourné dans le sens 7 et se raccordant vers l'axe 6 à la face périphérique intérieure 8,
- une face périphérique intérieure 11 qui constitue la deuxième surface précitée et, à cet effet, présente une forme au moins approximativement cylindrique de révolution autour de cet axe 6, cette forme étant toutefois légèrement tronconique de révolution autour de cet axe 6, dans l'exemple illustré, de telle sorte que la face 11 s'évase légèrement dans le sens 7, à partir de l'épaulement 10 qui se raccorde à cette face 11 dans le sens d'un éloignement par rapport à l'axe 6,
- une face d'engagement 12 à laquelle la face périphérique intérieure 11 se raccorde dans le sens d'un éloignement par rapport à son raccordement à l'épaulement 10 et qui présente une forme tronconique de révolution autour de l'axe 6, évasée dans le sens 7, avec une conicité plus prononcée que celle de la face périphérique intérieure 11 afin de faciliter l'engagement de l'about femelle 4 sur l'about mâle 1,
- une face frontale 13 à laquelle la face d'engagement 12 se raccorde dans le sens 7, qui est elle même tournée dans le sens 7 et présente une forme annulaire, plane, de révolution autour de l'axe 6 auquel elle est perpendiculaire, cette face frontale 13 raccordant ainsi la face d'engagement 12, dans le sens d'un éloignement par rapport à l'axe 6, à la face périphérique extérieure 9 du tuyau 5.

L'about mâle 1 du tuyau 2 présente quant à lui, entre des faces périphériques respectivement intérieure 14 et extérieure 15 l'une et l'autre cylindriques de révolution autour de l'axe 6 avec des diamètres respectifs égaux à celui de la face périphérique intérieure 8 du tuyau 5 et à celui de la face périphérique extérieure 9 de celui-ci :
- une face frontale 16 annulaire, plane, de révolution autour de l'axe 6 auquel elle est perpendiculaire en étant tournée en sens opposé au sens 7, cette face 16 se raccordant vers l'axe 6 à la face périphérique intérieure 14,
- une face d'engagement 17 tronconique de révolution autour de l'axe 6 avec une conicité sensiblement identique à celle de la face d'engagement 12, cette face 17 étant tournée dans le sens d'un éloignement par rapport à l'axe 6 et s'évasant progressivement dans le sens 7 à partir d'un raccordement à la face frontale 16 suivant un diamètre non référencé inférieur à celui, également non référencé, du raccordement mutuel de l'épaulement 10 et de la face périphérique intérieure 11 de l'about femelle du tuyau 5,
- une gorge 18 annulaire de révolution autour de l'axe 6, à laquelle la face d'engagement 17 se raccorde dans le sens 7 avec un diamètre également inférieur à celui du raccordement mutuel de l'épaulement 10 et de la face périphérique intérieure 11 de l'about femelle 4 du tuyau 5 et qui sera décrite ultérieurement en relation avec la description de la garniture d'étanchéité 3 engagée dans cette gorge 18,
- une face périphérique extérieure 19 tournée dans le sens d'un éloignement par rapport à l'axe 6 et se raccordant à la gorge 18 en sens opposé au sens 7, suivant un diamètre intermédiaire entre les diamètres non référencés des raccordements respectifs de la face périphérique intérieure 11 de l'about femelle 4 avec l'épaulement 10 et la face d'engagement 12 de celui-ci, laquelle face périphérique extérieure 19 présente une forme au moins approximativement cylindrique de révolution autour de l'axe 6 bien que légèrement tronconique et s'évasant dans le sens 7 dans l'exemple illustré, sa conicité étant sensiblement identique à celle de la face périphérique intérieure 11 de l'about femelle 4,
- un épaulement 20 annulaire de révolution autour de l'axe 6, plan et perpendiculaire à celui-ci, lequel épaulement 20 est tourné en sens opposé au sens 7 et se raccorde d'une part, dans le sens d'un rapprochement vis-à-vis de l'axe 6, à la face périphérique extérieure 19 suivant un diamètre coïncidant approximativement avec celui du raccordement de la face périphérique intérieure 11 de l'about femelle 4 du tuyau 5 avec la face d'engagement 12 de cet about femelle 4, et d'autre part, dans le sens d'un éloignement vis-à-vis de l'axe 6, à la face périphérique extérieure 15 du tuyau 2.

L'épaulement 20 est ainsi décalé dans le sens 7, par rapport à la face frontale 16, d'une distance sensiblement égale à la distance dont la face frontale 13 est décalée par rapport à l'épaulement 10, respectivement sur l'about mâle 1 et sur l'about femelle 4, et les dimensions respectives des faces d'engagement 12 et 17 parallèlement à l'axe 6 sont inférieures aux dimensions respectivement correspondantes de la face périphérique intérieure 11 et de la face périphérique extérieure 12 si bien qu'en emboîtant l'about femelle 4 dans le sens 7 sur l'about mâle 1, on peut l'amener dans la position illustrée en trait mixte à la figure 1, dans laquelle :
- l'épaulement 10 est placé en regard de la face frontale 16 et respecte vis-à-vis de cette dernière un jeu non référencé, généralement de l'ordre de quelques millimètres, parallèlement à l'axe 6 dans le cas de tuyaux 2 et 5 en béton armé du type utilisé à titre de canalisation d'évacuation des eaux usées, par exemple,
- la face frontale 13 est placée en regard de l'épaulement 20 et respecte vis-à-vis de ce dernier un jeu également non référencé, présentant également cette dimension parallèlement à l'axe 6,
- la face périphérique intérieure 11 est placée en regard de la gorge 18 et de la face périphérique extérieure 19, à laquelle elle est parallèle et vis-à-vis de laquelle elle respecte également un jeu non référencé de l'ordre de quelques millimètres.

On observera que, bien que l'on ait décrit et représenté des abouts sans tulipe ni collet, on ne doit en déduire aucune limitation quant au champs d'application de la présente invention.

De façon connue en elle-même, la garniture d'étanchéité 3 fait saillie par rapport à un prolongement géométrique 38 de la face périphérique extérieure 19 sur la gorge 18, dans le sens d'un éloignement par rapport à l'axe 6, notamment à l'état libre de toute déformation élastique dans lequel elle est illustrée à la figure 2 et, en trait plein, à la figure 1, mais, dans cette position limite, prédéterminée d'emboîtement, la garniture d'étanchéité 3 est comprimée élastiquement, vers l'axe 6 et vers le prolongement géométrique 38 de la face périphérique extérieure 19, ainsi qu'infléchie élastiquement dans le sens 7 par la face périphérique intérieure 11 de l'about femelle 4, comme on l'a illustré en trait mixte à la figure 1, de façon à assurer une étanchéité entre les abouts mâle 1 et femelle 4, sans discontinuité.

Pour recevoir la garniture d'étanchéité 3 et, dans l'exemple illustré, la retenir totalement à l'encontre d'un déplacement dans le sens 7 ou en sens opposé par rapport à l'about mâle 1, la gorge 18, annulaire de révolution autour de l'axe 6, présente un fond 21 tourné dans le sens d'un éloignement par rapport à l'axe 6 mais décalé vers celui-ci par rapport à la face périphérique extérieure 19, et ce fond 21 est raccordé respectivement à la face d'engagement 17 et à la face périphérique extérieure 19 par un flanc 22, 23. Le fond 21 est au moins approximativement cylindrique de révolution autour de l'axe 6 ; dans l'exemple illustré, il présente une légère conicité, de même sens et du même ordre que celle de la face périphérique extérieure 19. En outre, par exemple à proximité immédiate de son raccordement avec le flanc 22, le fond 21 présente localement une conformation permettant l'ancrage mutuel de la garniture d'étanchéité 3 et du tuyau 2 notamment par moulage de celui-ci directement sur la garniture d'étanchéité 3, cette conformation étant, dans l'exemple illustré, définie par une rainure en queue d'aronde 24, de révolution autour de l'axe 6, aménagée en creux dans le fond 21. Il est bien entendu que d'autres dispositions analogues pourraient être choisies sans que l'on sorte pour autant du cadre de la présente invention, de même que l'on pourrait prévoir un montage flottant de la garniture d'étanchéité 3 dans la gorge 18 ou une solidarisation mutuelle sans ancrage, par exemple par friction ou collage, auxquels cas le fond 21 serait lisse.

Le flanc 22, constituant le flanc amont en référence au sens 7, présente dans l'exemple illustré une concavité ouverte vers l'aval en référence à ce sens 7 alors que le flanc 23, constituant le flanc aval en référence au sens 7, présente une concavité ouverte en sens opposé au sens 7 au niveau de son raccordement avec le fond 21, et une convexité en sens opposé au sens 7 au niveau de son raccordement avec la face périphérique extérieure 19.

La garniture d'étanchéité 3, dont on a désigné par 25 une fibre moyenne circulaire de révolution autour de l'axe 6, présente perpendiculairement à cette fibre moyenne 25 une section courante sensiblement constante. Dans une zone de talon 26 engagée dans la gorge 18, cette section courante est complémentaire de la section de la gorge 18 dans un quelconque plan incluant l'axe 6. La forme de cette section courante est par ailleurs telle que la garniture d'étanchéité 3 présente en saillie hors de la gorge 18 dans le sens d'un éloignement par rapport à l'axe 6 une zone d'étanchéité 27 qui, lorsque l'about femelle 4 occupe la position limite d'emboîtement illustrée en trait mixte, est rabattue vers le prolongement géométrique 38 de la face périphérique extérieure 19 par contact avec la face périphérique intérieure 11, avec déformation élastique de la garniture d'étanchéité 3 en compression et en flexion, comme on l'a illustré en trait mixte à la figure 1, afin d'assurer l'étanchéification recherchée entre l'about mâle 1 et l'about femelle 4 ; par contre, en l'absence de déformation élastique de la garniture d'étanchéité 3, notamment immédiatement avant l'engagement coaxial de l'about femelle 4 sur l'about mâle 1, cette zone d'étanchéité 27 forme par rapport au prolongement géométrique 38 de la face 19, dans le sens d'un éloignement par rapport à l'axe 6, une saillie telle que, lors de cet engagement, par déplacement de l'about femelle 4 dans le sens 7 par rapport à l'about mâle 1, l'about femelle 4 vienne initialement en contact de la garniture d'étanchéité 3, dans cette zone d'étanchéité 27, soit par la face d'engagement 12 comme on l'a illustré, soit par une zone de la face périphérique intérieure 11 immédiatement adjacente à cette face d'engagement 12.

A cet effet, la garniture d'étanchéité 3 présente dans l'exemple illustré aux figures 1 et 2 la forme d'un corps massif, de section courante cunéiforme définie par :
- une face 28 d'appui sur le fond 21 de la gorge 18, laquelle face 28 est tournée vers l'axe 6 et présente une forme étroitement complémentaire de celle de ce fond 21 et, notamment, comporte dans une zone limite amont en référence au sens 7 une nervure en queue d'aronde 29 annulaire, continue, de révolution autour de l'axe 6, étroitement complémentaire de la gorge en queue d'aronde 24 et engagée sans jeu dans cette dernière,
- vers l'amont en référence au sens 7, un chant 30 convexe vers l'amont en référence au sens 7 de façon à épouser le flanc concave 22 de la gorge 18, ce chant 30 se raccordant à la face d'appui 28 dans le sens d'un rapprochement par rapport à l'axe 6, au niveau de la nervure 29,
- vers l'aval, en référence au sens 7, un chant 31 également convexe, quant à lui dans le sens 7, et se raccordant dans le sens d'un rapprochement vis-à-vis de l'axe 6 au fond 21 de façon à épouser le flanc 23 dans la zone convexe de celui-ci.

Les formes respectives de la face d'appui 28, du chant 30 et du chant 31 restent sensiblement constantes, que l'on considère la garniture d'étanchéité 3 dans la conformation qu'elle présente en l'absence de déformation élastique, comme on l'a schématisé en trait plein à la figure 1 ainsi qu'à la figure 2, ou dans sa conformation après déformation élastique sous l'effet de la face périphérique intérieure 11 de l'about femelle 4 lorsque celui-ci occupe sa position limite d'emboîtement sur l'about mâle 1, comme on l'a schématisé en trait mixte à la figure 1 ; la face d'appui 28 et les chants 30 et 31 définissent la zone de talon 26 de la garniture d'étanchéité 3.

Naturellement, d'autres formes, mutuellement associées, de la gorge 18 de l'about mâle 1 et de la zone de talon 26 de la garniture d'étanchéité 3 pourraient être choisies sans que l'on sorte pour autant du cadre de la présente invention.

La garniture d'étanchéité 3 est par ailleurs délimitée par des faces qui se déforment sensiblement lors de cette déformation, qui s'effectue en compression et en flexion, et définissent sa zone d'étanchéité 27 ; ces faces vont être décrites, à titre d'exemple non limitatif, en référence à la conformation de la garniture d'étanchéité 3 en l'absence de déformation élastique, c'est-à-dire à la conformation illustrée à la figure 2 et en trait plein à la figure 1.

Elles comportent notamment une face 32 d'attaque par l'about femelle 11, et plus précisément par la face périphérique intérieure 11 de celui-ci et, éventuellement, en début d'emboîtement, par sa face d'engagement 12, laquelle face d'attaque 32 présente en l'absence de compression de la garniture d'étanchéité 3 une forme tronconique de révolution autour de l'axe 6, et s'évase dans le sens 7 de façon à être tournée à la fois dans le sens d'un éloignement par rapport à l'axe 6 et en sens opposé au sens 7. En termes d'angle au sommet du cone respectif, non illustré, la conicité de cette face d'attaque 32 est plus prononcée que celle des faces d'engagement 17 et 12 et, a fortiori, que celle des faces 11 et 19 ; elle est également plus prononcée que celle que présente ici la face d'appui 28, reprenant la conicité du fond 21, si bien que la face d'attaque 32 et la face d'appui 28 forment entre elles, dans une section courante de la garniture d'étanchéité 3, un angle a dont le sommet, non référencé, est tourné vers l'amont en référence au sens 7 et qui, inférieur à 45° dans l'exemple non limitatif illustré, communique à la garniture d'étanchéité 3 sa section cunéiforme, progressivement évasée dans le sens 7.

La face d'attaque 32, raccordée au chant 30 en sens opposé au sens 7, avec un diamètre correspondant sensiblement à celui du raccordement du flanc 22 de la gorge 18 avec la face d'engagement 17 de l'about mâle 1, se prolonge dans le sens 7 jusqu'à se raccorder à une face 33 tournée dans le sens d'un éloignement par rapport à l'axe 6 et convexe, par exemple avec une section en forme d'arc de cercle centré sur la fibre moyenne 25. Cette face arquée culmine, dans le sens d'un éloignement par rapport à l'axe 6, à une distance de celui-ci intermédiaire entre les rayons des raccordements respectifs de la face d'engagement 12 avec la face périphérique intérieure 11 de l'about femelle 4 et avec la face frontale 13 de celui-ci, si bien que lors de l'engagement coaxial de l'about femelle 4 sur l'about mâle 1, le contact entre l'about femelle 4 et la garniture d'étanchéité 3 s'établit initialement entre la face d'engagement 12 et une zone de la face arquée 33 adjacente à la face d'attaque 32 ; cette zone adjacente doit par conséquent être assimilée à la face d'attaque 32 au regard de la présente invention, c'est-à-dire peut présenter les dispositions caractéristiques de la présente invention au même titre que la face d'attaque 32 proprement dite. Vers l'aval en référence au sens 7, la face arquée 33 se poursuit jusqu'à présenter une orientation approximativement perpendiculaire à l'axe 6 à un niveau auquel elle est en contact tangentiel avec la partie convexe du flanc 23 de la gorge 18, ce qui laisse subsister entre la face arquée 33 et le raccordement du flanc 23 avec la face périphérique extérieure 19 de l'about mâle 1 un jeu annulaire, continu 34 lorsque la garniture d'étanchéité 3 se trouve à l'état libre de toute compression ; lorsque, par contre, la garniture d'étanchéité 3 se trouve à l'état comprimé vers l'intérieur de la gorge 18 et infléchi dans le sens 7, dans la position limite d'emboîtement mutuel des abouts mâle 1 et femelle 4, comme on l'a illustré en trait mixte à la figure 1, elle peut venir s'appliquer contre le flanc 23 de la gorge 18 avec disparition du jeu 34.

Au niveau où elle est ainsi tangente à la partie convexe du flanc 23 de la gorge 18, la face arquée 33 de la garniture d'étanchéité 3 se raccorde par un congé 35, épousant cette zone convexe jusqu'à son raccordement avec la zone concave du flanc 23, lequel congé 35 raccorde la face arquée 33 au chant convexe 31 de la garniture d'étanchéité 3.

Celle-ci s'apparente aux garnitures d'étanchéité connues, dont la face d'attaque 32, délimitant le corps de la garniture proprement dit, et non une pellicule intermédiaire superposée à ce corps par l'intermédiaire d'un lubrifiant fluide, est destinée à venir au contact de la face périphérique intérieure 11 de l'about femelle 4, et éventuellement de la face d'engagement 12 de celui-ci, exclusivement par l'intermédiaire d'un lubrifiant fluide, au cours de l'emboîtement de l'about femelle 4 dans le sens 7 sur l'about mâle 1 aussi bien que lorsque la position limite d'emboîtement mutuel est atteinte.

Conformément à la présente invention, la garniture d'étanchéité 3 est rendue glissante en permanence, au moins au niveau de sa face d'attaque 32 et d'une zone de la face arquée 33 immédiatement adjacente à cette face d'attaque 32, c'est-à-dire dans toutes ses zones superficielles susceptibles de venir au contact de la face d'engagement 17 et de la face périphérique extérieure 19 de l'about mâle 1 lors de l'insertion de celui-ci dans le sens 7 à l'intérieur de l'about femelle 4 ainsi que dans la position limite prédéterminée d'emboîtement de l'about mâle 1 dans l'about femelle 4, par revêtement au moyen d'une pellicule souple 36 d'un matériau solide de glissement tel que du PTFE (polytétrafluoréthylène), ou matériau analogue.

Dans l'exemple non limitatif illustré en trait plein à la figure 2 et par épaississement du trait à la figure 1, la pellicule 36 couvre ainsi intégralement, en les épousant étroitement et en étant solidarisée en tout point avec elles, une zone superficielle de la garniture d'étanchéité 3 regroupant l'intégralité du chant 30, la face d'attaque 32, et la face arquée 33 en laissant dégagés le congé 35, le chant 31, la face 28 et le talon 29 mais on pourrait effectuer d'autres choix tels que toute zone superficielle de la garniture 3 susceptible d'entrer en contact avec la face d'engagement 12 ou avec la face périphérique intérieure 11 de l'about femelle 4 lors de l'emboîtement de l'about mâle 1 dans cet about femelle 4, en tenant compte de la déformation élastique que subit alors la garniture d'étanchéité 3, puis lorsque la position limite d'emboîtement mutuel est atteinte soit recouverte par la pellicule 36 qui, ainsi, au fur et à mesure de l'emboîtement et lorsque la position limite prédéterminée d'emboîtement est atteinte, constitue un intermédiaire de contact entre la garniture d'étanchéité 3 et le béton constitutif de l'about femelle 4. En outre, comme il est préféré, la pellicule 36 couvre ainsi des zones superficielles de la garniture d'étanchéité 3 qui pourraient venir au contact de l'about femelle 4, par la face 11 ou 12 de celui-ci, si l'on venait à extraire l'about mâle 1 de l'about femelle 4 par un mouvement d'éloignement relatif des deux tuyaux parallèlement à leur axe 6.

D'autres configurations de la pellicule 36 pourraient cependant être adoptées sans que l'on sorte pour autant du cadre de la présente invention, et notamment une configuration telle que cette pellicule 36 enveloppe intégralement la garniture 3, comme on l'a schématisé en trait mixte à la figure 2.

La pellicule 36 peut être réalisée et solidarisée par l'un quelconque des moyens précités avec la garniture d'étanchéité 3.

Elle présente une épaisseur aussi faible que possible, par exemple limitée à quelques dizièmes de millimètre au maximum, de façon à ne pas nuire à la possibilité pour la garniture 3 d'épouser, par son intermédiaire, des rugosités de surface que peut présenter la face périphérique intérieure 11 de l'about femelle 4, lorsque la position limite d'emboîtement mutuel est atteinte, afin de ne pas nuire à l'étanchéité obtenue, qui doit s'établir par contact entre la pellicule d'étanchéité 36 et la face périphérique intérieure 11 de l'about femelle 4.

. On observera que la présence éventuelle de la pellicule 36 dans des zones de la garniture d'étanchéité 3 logées à l'intérieur de la gorge 18 de l'about mâle 1 ne nuit pas à l'ancrage de la garniture d'étanchéité 3 dans cette gorge 18 dans la mesure où l'expérience a montré, de façon tout à fait surprenante, que le revêtement de la garniture d'étanchéité 3 au moyen d'une pellicule d'un matériau solide de glissement tel que du PTFE conservait l'adhérence avec un matériau rugueux, poreux tel que du béton, même si cette rugosité et cette porosité étaient rendues pratiquement imperceptibles à la vue et au toucher par un soin tout particulier apporté à la fabrication, contrairement à ce que l'on constate lorsqu'on utilise des lubrifiants pâteux ou liquides.

Cette constatation tout à fait surprenante a également conduit à compléter la présence de la pellicule 36 sur la garniture d'étanchéité 33 par un traitement de surface du matériau rugueux, poreux, même de façon imperceptible à la vue et au toucher, tel que du béton constituant l'about femelle 4 notamment au niveau de sa face d'engagement 12 et de sa face périphérique intérieure 11, par imprégnation d'un matériau de glaçage à l'état fluide, susceptible de faire prise et de durcir en formant une pellicule lisse, dont on autorise ou provoque ensuite la prise et le durcissement avant de pratiquer l'emboîtement mutuel de l'about mâle 1 et de l'about femelle 4.

Ce matériau de glaçage pénètre plus ou moins dans le matériau constitutif de l'about femelle 4, dans des zones de celui-ci directement adjacentes à sa face d'engagement 12 et à sa face périphérique intérieure 11, et on l'a schématisé en 37 à la figure 1.

A titre de matériau de glaçage, on peut utiliser par exemple des résines polymérisables telles que les résines époxydes et acryliques, dont on l'imprègne des faces 11 et 12 à saturation pour former la pellicule de glaçage, par exemple par pulvérisation bien que d'autres modes d'application puissent être choisis tels que l'application au pinceau ou au rouleau.

Les essais pratiqués ont démontré que, dès lors que l'on a ainsi appliqué un glaçage 37 à la face d'engagement 12 et à la face périphérique intérieure 11 de l'about femelle 4, du moins dans les zones de ces faces 11 et 12 susceptibles de venir au contact de la garniture d'étanchéité 3 lors de l'emboîtement mutuel des abouts mâle 1 et femelle 4, y compris dans la position limite prédéterminée d'emboîtement, et le cas échéant lors d'un déboîtement mutuel des abouts femelles 1 et 4, et que la garniture d'étanchéité 3 a été revêtue de la pellicule 36 au moins dans l'ensemble de ses zones superficielles ainsi susceptibles de venir au contact des faces 11 et 12, on assure une lubrification efficace et permanente entre la garniture d'étanchéité 3 et l'about femelle 4.

Si l'on excepte la présence de la pellicule 36, la garniture d'étanchéité 3 est réalisée de façon connue, en matériau élastiquement déformable au moins en compression et en flexion, et par exemple en caoutchouc naturel ou synthétique, le choix du matériau le plus approprié en fonction du contexte relevant des aptitudes normales d'un Homme du métier.

Un tel Homme du métier comprendra également aisément que la forme de la section de la garniture d'étanchéité 3 telle qu'elle a été décrite ne constitue qu'un exemple non limitatif, et que l'on pourrait mettre en oeuvre l'invention sur des garnitures d'étanchéité 3 présentant d'autres formes en section, en conservant un revêtement au moyen d'une pellicule souple 36 d'un matériau solide de glissement tel que PTFE pour l'ensemble des zones superficielles de sa garniture d'étanchéité 3 susceptibles de venir au contact du matériau rugueux, poreux, même de façon imperceptible à la vue et au toucher, constituant l'about femelle 4, pendant l'emboîtement mutuel des abouts mâle 1 et femelle 4 et à la fin de cet emboîtement, ainsi que le cas échéant lors d'un déboîtement mutuel ultérieur, en association avec un glaçage du matériau constitutif de l'about femelle 4 au niveau des faces de ce dernier destinées à venir au contact de la garniture d'étanchéité 3 par l'intermédiaire de la pellicule 36 pendant l'emboîtement comme à la fin de celui-ci, et le cas échéant lors d'un déboîtement mutuel ultérieur.

Un Homme du métier comprendra également aisément que la garniture d'étanchéité pourrait être montée non pas sur l'about mâle 1, comme on l'a décrit en référence à la figure 1, mais à l'intérieur de l'about femelle 4, auquel cas le glaçage serait appliqué sur l'about mâle 1, comme on l'a illustré à la figure 3 à laquelle on se réfèrera à présent.

On a certes illustré à cette figure 3 une garniture d'étanchéité 103 présentant une conception identique à celle de la garniture d'étanchéité 3 décrite en référence aux figures 1 et 2, mais on pourrait naturellement adopter également l'une quelconque des configurations connues d'un Homme du métier pour assurer avec un tel positionnement une étanchéité entre un about mâle 1 et un about femelle 4.

On retrouve, avec des différences de proportions, les faces ou épaulements 14 à 17, 19, 20 de l'about mâle 1 du tuyau 2 et 8 à 13 de l'about femelle 4 du tuyau 5, mais aucune gorge de réception d'une garniture n'est aménagée à la transition des faces 17 et 19 de l'about mâle 1. Par contre, une gorge 118, annulaire de révolution autour de l'axe 6, est aménagée dans l'about femelle 4, à la transition entre les faces 11 et 12 de celui-ci, dans le sens d'un éloignement par rapport à l'axe 6, avec une section courante sensiblement identique à celle de la gorge 18, en utilisant comme référence non pas le sens 7 de déplacement de l'about femelle 4 par rapport à l'about mâle 1 lors de l'emboîtement, comme dans le cas de la figure 1 où c'est l'about mâle 1 qui porte la garniture d'étanchéité 3, mais le sens opposé 107 de déplacement de l'about mâle 1, ne portant pas la garniture d'étanchéité, par rapport à l'about femelle 4 portant la garniture d'étanchéité 103, et par rapport à cette dernière, lors de l'emboîtement, et en tenant compte de l'inversion de la position de la garniture d'étanchéité par rapport à l'axe 6. Une position de l'about mâle 1 par rapport à l'about femelle 4 et à la garniture d'étanchéité 103, ainsi que la conformation correspondante de cette dernière, immédiatement avant l'emboîtement ont été illustrées en trait plein à la figure 3, où l'on a illustré en trait mixte une position limite prédéterminée d'emboîtement de l'about mâle 1 dans l'about femelle 4 ainsi que la conformation correspondante de la garniture d'étanchéité 103, comparativement déformée en compression dans le sens d'un éloignement par rapport à l'axe 6 et en flexion dans le sens 107 pour établir une relation d'étanchéité avec la face périphérique extérieure 19 de l'about mâle 1, ce qui impose les dimensions, parallèlement à l'axe 6, des faces 17 et 19 de l'about mâle 1 et des faces 11 et 12 de l'about femelle 4, de façon aisément concevable par un Homme du métier.

La gorge 118 loge et retient une zone de talon 126 de la garniture d'étanchéité 103, dont une zone 127 d'étanchéité avec la face périphérique extérieure 19 de l'about mâle 1 forme une saillie vers l'axe 6 hors de la gorge 118. En référence au sens 107 au lieu du sens 7, d'une part, et en tenant compte de l'inversion de la position de la garniture d'étanchéité 103, par rapport à la garniture d'étanchéité 3, en référence à l'axe 6, la garniture d'étanchéité 103, dans ses zones 118 et 127, présente une section courante aisément déductible, par un Homme du métier, de la section courante de la garniture d'étanchéité 3 telle qu'elle a été décrite en référence aux figures 1 et 2.

Comme la garniture d'étanchéité 3, la garniture d'étanchéité 103 est revêtue solidairement d'une pellicule 136, en tout point comparable à la pellicule 36, au moins dans toutes ses zones superficielles susceptibles de venir au contact de la face d'engagement 17 et de la face périphérique extérieure 19 de l'about mâle 1 lors de l'emboîtement de ce dernier, dans le sens 107, à l'intérieur de l'about femelle 4 et dans la position limite prédéterminée d'emboîtement, compte-tenu de la déformation que subit alors la garniture d'étanchéité 103, et éventuellement lors d'un déboîtement mutuel des deux abouts 1, 4, également compte-tenu des déformations que subit alors la garniture d'étanchéité 103.

Les faces 17 et 19 de l'about mâle 1 présentent quant à elles un glaçage 137 en tout point comparable au glaçage 37 précédemment décrit.

Naturellement, dans le cas de cette implantation comme dans le cas de l'implantation illustrée à la figure 1, la garniture d'étanchéité 103 ou 3 peut être intégrée directement au matériau constitutif du tuyau qui la porte, à savoir du béton armé dans l'exemple illustré, lors de la fabrication de ce tuyau par moulage mais on peut également prévoir un montage libre parallèlement à l'axe 6, également connu en lui-même d'un Homme du métier, avec une liaison mutuelle par friction, ou une solidarisation mutuelle par des moyens autres qu'un ancrage, tels qu'un collage, de façon également connue.

Qu'elle soit portée par l'about mâle 1 ou par l'about femelle 4,, selon une variante de forme non représentée mais aisément compréhensible par un Homme du métier, la garniture d'étanchéité 3 ou 103 peut présenter une section courante circulaire autorisant sa rotation sur elle-même par rapport aux abouts mâle 1 et femelle 4, de telle sorte qu'elle ne présente pas de face d'attaque bien définie, et être par exemple partiellement logée dans une gorge 18, 118 de section courante trapézoïdale. On préfère associer à une telle forme de la garniture 3, 103 un revêtement intégral de la garniture d'étanchéité 3 ou 103 par la pellicule 36, 136 de matériau solide de glissement.

## Revendications

1. Procédé de réalisation d'un joint, notamment étanche, entre des première et deuxième pièces (2, 5), notamment deux tuyaux ou analogues, assemblées mutuellement par translation relative suivant une direction longitudinale déterminée et présentant respectivement une première (19 ; 11) ou deuxième (11, 19) surface longitudinale de recouvrement mutuel, les première et deuxième surfaces étant placées en regard l'une de l'autre, approximativement parallèlement entre elles, dans une position relative déterminée des première et deuxième pièces (2, 5), résultant de leur assemblage mutuel, et au moins la deuxième surface (11 ; 19) étant rugueuse, notamment définie par un matériau poreux tel que du béton, ledit procédé comprenant les étapes consistant à, successivement :
a) monter et retenir sur la première surface (19 ; 11) une garniture, notamment d'étanchéité, (3, 103) d'un type élastiquement déformable en compression et/ou en flexion, notamment en caoutchouc naturel ou synthétique, présentant une face (32, 33) d'attaque par la deuxième surface (11 ; 19) lors de l'assemblage mutuel des première et deuxième pièces (2, 5),
b) assembler mutuellement les première et deuxième pièces (2, 5) par translation longitudinale relative jusqu'à ce que ladite position relative déterminée soit atteinte, en provoquant une déformation élastique de la garniture (3, 103), en compression et/ou flexion, par appui de la deuxième surface (11 ; 19) sur la face d'attaque (32, 33),
**caractérisé par** la combinaison des étapes supplémentaires consistant à, préalablement à l'étape b) :
c) revêtir d'une pellicule souple (36, 136) d'un matériau solide de glissement une zone superficielle (30, 32, 33, 35) de la garniture (3, 103), ladite zone superficielle (30, 32, 33, 35) incluant au moins la face d'attaque (32, 33),
d) imprégner d'un matériau de glaçage (37, 137) à l'état fluide, susceptible de faire prise et de durcir en formant une pellicule lisse, une zone (11, 12 ; 17, 19) de la deuxième surface incluant au moins la zone (11, 12 ; 17 ; 19) de celle-ci qui vient au contact de la face d'attaque (32, 33) lors de ladite translation longitudinale relative et dans ladite position relative déterminée, puis autoriser ou provoquer la prise et le durcissement du matériau de glaçage (37, 137).

2. Procédé selon la revendication 1, **caractérisé en ce que** ladite pellicule (36, 136) laisse dégagée une autre zone superficielle (29, 28, 31, 35) de la garniture (3, 103), ladite autre zone superficielle (29, 28, 31, 35) étant placée au contact de la première surface (gorge 18, 118).

3. Procédé selon la revendication 1, **caractérisé en ce que** ladite pellicule (36, 136) couvre intégralement la garniture (3, 103).

4. Procédé selon l'une quelconque des revendications 1 à 3, **caractérisé en ce que** la garniture (3, 103) est retenue sur la première surface (19, 11) par un procédé choisi dans un groupe comportant l'immobilisation par friction, l'ancrage mécanique et le collage.

5. Procédé selon l'une quelconque des revendications 1 à 4, **caractérisé en ce que** l'on met en oeuvre l'étape c) par un procédé choisi dans un groupe comportant l'apposition d'une bande préfabriquée dudit matériau solide de glissement la coextrusion avec la garniture (3, 103), la pulvérisation sur celle-ci, le trempage de celle-ci.

6. Procédé selon l'une quelconque des revendications 1 à 5, **caractérisé en ce que** le matériau de glaçage est une résine polymérisable choisie dans un groupe comportant les résines époxydes et acryliques.

7. Procédé selon l'une quelconque des revendications 1 à 6, **caractérisé en ce que** l'on imprègne du matériau de glaçage ladite zone (11, 12 ; 17, 19) de la deuxième surface (11, 12 ; 17, 19) à saturation en formant une pellicule de glaçage.

8. Procédé selon l'une quelconque des revendications 1 à 7, **caractérisé en ce que** le matériau solide de glissement est choisi dans un groupe comportant le PTFE, et **en ce que** la pellicule présente une épaisseur de l'ordre de quelques dixièmes de millimètre au maximum.

9. Procédé selon l'une quelconque des revendications 1 à 8, **caractérisé en ce que** les première et deuxième pièces (2, 5) sont des tuyaux ou analogues dont un about (1, 4) définit la première (17, 19) ou deuxième (11, 13) surface, respectivement, qui présente une forme annulaire et **en ce que** la garniture (3, 103) et la pellicule (36, 136) de matériau solide de glissement présentent la forme respective d'une bague annulaire continue.

10. Pièce pour la mise en oeuvre du procédé selon l'une quelconque des revendications 1 à 9, notamment un tuyau ou analogue, présentant une première surface longitudinale (19, 11) de recouvrement d'une deuxième surface longitudinale (11, 19) d'une autre pièce (5), notamment un tuyau ou analogue, ladite première surface (19, 11) portant solidairement une garniture, notamment d'étanchéité (3, 103), d'un type élastiquement déformable en compression et/ou en flexion, notamment en caoutchouc naturel ou synthétique, présentant une face (32, 33) d'attaque par la deuxième surface (11, 19) lors d'une translation longitudinale relative d'assemblage mutuel des deux pièces (2, 5), et susceptible de se déformer élastiquement,
**caractérisée en ce qu'**une zone superficielle (30, 32, 33, 35) de garniture (3, 103), ladite zone superficielle (30, 32, 33, 35) incluant au moins la face d'attaque (32, 33), est revêtue d'une pellicule souple (36, 136) d'un matériau solide de glissement.

11. Pièce selon la revendication 10, **caractérisée en ce que** ladite pellicule (36, 136) laisse dégagée une autre zone superficielle (29, 28, 31, 35) de la garniture (3, 103), ladite autre zone superficielle (29, 28, 31, 35) étant placée au contact de la première surface (gorge 18, 118).

12. Pièce selon la revendication 10, **caractérisée en ce que** ladite pellicule (36, 136) couvre intégralement la garniture (3, 103).

13. Pièce selon l'une quelconque des revendications 10 à 12, **caractérisée en ce que** la garniture (3, 103) est retenue sur la première surface (19, 11) par un procédé choisi dans un groupe comportant l'immobilisation par friction, l'ancrage mécanique et le collage.

14. Pièce selon l'une quelconque des revendications 10 à 13, **caractérisée en ce que** le matériau solide de glissement est choisi dans un groupe comportant le PTFE, et **en ce que** la pellicule présente une épaisseur de l'ordre de quelques dixièmes de millimètre au maximum.

15. Pièce selon l'une quelconque des revendications 10 à 14, **caractérisée en ce qu'**elle est un tuyau ou analogue dont un about (1, 4) définit la première (17, 19) surface, qui présente une forme annulaire, et **en ce que** la garniture (3, 103) et la pellicule (36, 136) de matériau solide de glissement présentent la forme respective d'une bague annulaire continue.

16. Pièce pour la mise en oeuvre du procédé selon l'une quelconque des revendications 1 à 9, notamment un tuyau ou analogue présentant une deuxième (11, 19) surface longitudinale de recouvrement d'une première surface longitudinale (19, 11) d'une autre pièce (5), notamment un tuyau ou analogue, au moins la deuxième surface (11, 19) étant rugueuse, notamment définie par un matériau poreux tel que du béton, et apte à venir en appui sur une face (32, 33) d'attaque d'une garniture (3, 11), notamment d'étanchéité, portée solidairement par la première surface (19, 11) lors d'une translation longitudinale relative d'assemblage mutuel des deux pièces (2, 5), **caractérisée en ce qu'**une zone (11, 12, 17, 19) de la deuxième surface incluant au moins la zone (11, 12, 17, 19) de celle-ci qui vient au contact de la première surface (19, 11) est imprégnée d'un matériau de glaçage (37, 137) formant une pellicule lisse et dure.

17. Pièce selon la revendication 16, **caractérisée en ce que** le matériau de glaçage est une résine polymérisable choisie dans un groupe comportant les résines époxydes et acryliques.

18. Pièce selon l'une quelconque des revendications 16 et 17, **caractérisée en ce que** ladite zone (11, 12, 17, 19) de la deuxième surface (11, 12, 17, 19) est imprégnée à saturation du matériau de glaçage formant la pellicule lisse et dure.

19. Pièce selon l'une quelconque des revendications 16 à 18, **caractérisée en ce qu'**elle est un tuyau ou analogue dont un about (1, 4) définit la deuxième (11, 13) surface, qui présente une forme annulaire.

## Claims

1. Method of producing a joint, in particular a fluid-tight one, between first and second parts (2, 5), in particular two pipes or similar, mutually assembled by relative translation in a specified longitudinal direction and respectively having a first (19; 11) or a second (11; 19) longitudinal mutual overlap surface, the first and the second surfaces being placed facing one another, approximately parallel with each other, in a specified relative position of the first and second parts (2, 5), as a result of their mutual assembly, and at least the second surface (11; 19) being rough, in particular defined by a porous material such as concrete, the said method comprising the steps successively consisting in:
a) fitting and retaining on the first surface (19; 11) a packing piece, in particular a sealing one, (3, 103) of a type that is elastically deformable in compression and/or in flexion, in particular made of natural or synthetic rubber, having a face (32, 33) for engagement with the second surface (11; 19) during the mutual assembly of the first and second parts (2, 5),
b) mutually assembling the first and second parts (2, 5) by relative longitudinal translation until the said specified relative position is reached, causing an elastic deformation of the packing piece (3, 103), in compression and/or in flexion, by the bearing of the second surface (11; 19) on the engagement surface (32, 33),
**characterized by** the combination of the additional steps consisting in, prior to step b):
c)covering, with a flexible film (36, 136) of a solid glazing material, a superficial zone (30, 32, 33, 35) of the packing piece (3, 103), the said superficial zone (30, 32, 33, 35) including at least the engagement surface (32, 33),
d) impregnating, with a glazing material (37, 137) in the fluid state, capable of setting and of hardening whilst forming a smooth film, a zone (11, 12; 17, 19) of the second surface including at least the zone (11, 12; 17; 19) of the latter which comes into contact with the engagement face (32, 33) during the said relative longitudinal translation and in the said specified relative position, and then of allowing or causing the setting and the hardening of the glazing material (37, 137).

2. Method according to claim 1, **characterized in that** the said film (36, 136) leaves another superficial zone (29, 28, 31, 35) of the packing piece (3, 103) clear, the said other superficial zone (29, 28, 31, 35) being placed in contact with the first surface (groove 18, 118).

3. Method according to claim 1, **characterized in that** the said film (36, 136) entirely covers the packing piece (3, 103).

4. Method according to any one of claims 1 to 3, **characterized in that** the packing piece (3, 103) is retained on the first surface (19, 11) by a method chosen from the group including immobilization by friction, mechanical anchoring and gluing.

5. Method according to any one of claims 1 to 4, **characterized in that** step c) is implemented by a method chosen from a group including application of a prefabricated band of the said solid slippery material, joint extrusion with the packing piece (3, 103), spraying onto the latter and steeping of the latter.

6. Method according to any one of claims 1 to 5, **characterized in that** the glazing material is a polymerizable resin chosen from a group including the epoxide and acrylic resins.

7. Method according to any one of claims 1 to 6, **characterized in that** the said zone (11, 12; 17, 19) of the second surface (11, 12; 17, 19) is impregnated to saturation with the glazing material thereby forming a glazing film.

8. Method according to any one of claims 1 to 7, **characterized in that** the solid slippery material is chosen from a group including PTFE, and **in that** the film has a maximum thickness of the order of a few tenths of a millimetre.

9. Method according to any one of claims 1 to 8, **characterized in that** the first and second parts (2, 5) are pipes or similar of which one end part (1, 4) defines the first (17, 19) or second (11, 13) surface respectively, which has an annular shape and **in that** the packing piece (3, 103) and the film (36, 136) of solid slippery material respectively have the shape of a continuous annular ring.

10. Part for the implementation of the method according to any one of claims 1 to 9, in particular a pipe of similar, having a first longitudinal surface (19, 11) for overlapping a second longitudinal surface (11, 19) of another part (5), in particular a pipe or similar, the said first surface (19, 11) firmly carrying a packing piece, in particular a sealing one (3, 103), of a type that is elastically deformable in compression and/or in flexion, in particular made of natural or synthetic rubber, having a face (32, 33) for engagement with the second surface (11; 19) during a relative longitudinal translation of mutual assembly of the two parts (2, 5), and capable of being deformed elastically, **characterized in that** a superficial zone (30, 32, 33, 35) of the packing piece (3, 103), the said superficial zone (30, 32, 33, 35) including at least the engagement face (32, 33) is coated with a flexible film (36, 136) of solid slippery material.

11. Part according to claim 10, **characterized in that** the said film (36, 136) leaves clear another superficial zone (29, 28, 31, 35) of the packing piece (3, 103), the said other superficial zone (29, 28, 31, 35) being placed in contact with the first surface (groove 18, 118).

12. Part according to claim 10, **characterized in that** the said film (36, 136) entirely covers the packing piece (3, 103).

13. Part according to any one of claims 10 to 12, **characterized in that** the packing piece (3, 103) is retained on the first surface (19, 11) by a method chosen from a group including immobilisation by friction, mechanical anchoring and gluing.

14. Part according to any one of claims 10 to 13, **characterized in that** the solid slippery material is chosen from a group including PTFE, and **in that** the film has a maximum thickness of the order of a few tenths of a millimetre.

15. Part according to any one of claims 10 to 14, **characterized in that** it is a pipe or similar of which one end part (1, 4) defines the first (17, 19) surface, which has an annular shape, and **in that** the packing piece (3, 103) and the film (36, 136) of solid slippery material have the respective shape of a continuous annular ring.

16. Part for the implementation of the method according to any one of claims 1 to 9, in particular a pipe of similar having a second (11, 19) longitudinal surface for overlapping a first longitudinal surface (19, 11) of another part (5), in particular a pipe or similar, at least the second surface (11, 19) being rough, in particular defined by a porous material such as concrete, and capable of coming to bear against an engagement face (32, 33) of a packing piece (3, 11), in particular a sealing one, carried firmly by the first surface (19, 11) during a relative longitudinal translation of mutual assembly of the two parts (2, 5), **characterized in that** a zone (11, 12, 17, 19) of the second surface including at least the zone (11, 12, 17, 19) of the latter which comes into contact with the first surface (19, 11) is impregnated with a glazing material (37, 137) forming a smooth, hard surface.

17. Part according to claim 16, **characterized in that** the glazing material is a polymerizable resin chosen from a group including the epoxide and acrylic resins.

18. Part according to any one of claims 16 and 17, **characterized in that** the said zone (11, 12, 17, 19) of the second surface (11, 12, 17, 19) is impregnated to saturation with a glazing material forming a smooth, hard surface.

19. Part according to any one of claims 16 to 18, **characterized in that** it is a pipe or similar of which an end part (1, 4) defines the second (11, 13) surface, which has an annular shape.

## Patentansprüche

1. Verfahren zum Herstellen einer Verbindung, insbesondere einer dichten Verbindung, zwischen einem ersten und einem zweiten Teil (2, 5), insbesondere zwei Rohren oder dergleichen, die durch relative Translation in einer bestimmten Längsrichtung miteinander zusammengebaut werden und eine erste (19; 11) bzw. zweite (11, 19), Längs-Oberfläche zur gegenseitigen Abdeckung aufweisen, wobei die erste und zweite Oberfläche einander gegenüberliegend näherungsweise zueinander parallel in einer bestimmten Relativlage des ersten und zweiten Teils (2, 5) angeordnet werden, die sich aus ihrem gegenseitigen Zusammenbau ergibt, und wobei wenigstens die zweite Oberfläche (11; 19) rauh ist und insbesondere von einem porösen Material gebildet ist, wie Beton, wobei das genannte Verfahren die Schritte aufweit, die aufeinanderfolgend bestehen aus:
a) auf der ersten Oberfläche (19; 11), dem Montieren und Halten einer Garnitur (3, 103), besonders einer Dichtung, einer auf Druck und/oder Biegung elastisch verformbaren Art, insbesondere aus natürlichem oder synthetischem Gummi, die eine Fläche (32, 33) zum Angriff durch die zweite Oberfläche (11; 19) während des gegenseitigen Zusamenbaus des ersten und zweiten Teils (2, 5) aufweist, und
b) dem gegenseitigen Zusammenbauen des ersten und zweiten Teils (2, 5) durch relative Translation in Längsrichtung, bis die genannte, bestimmte Relativlage erreicht wird, wobei man eine elastische Verformung der Garnitur (3, 103) auf Druck und/oder auf Biegung hervorruft, und zwar durch Anlage der zweiten Oberfläche (11; 19) auf der Angriffsfläche (32, 33),
**gekennzeichnet durch** die Kombination der ergänzenden Schritte, die daraus bestehen, daß man vor dem Schritt b):
c) eine Oberflächenzone (30, 32, 33, 35) der Garnitur (3, 103) mit einer weichen Haut (36, 136) aus einem festen Gleitmaterial verkleidet, wobei die Oberflächenzone (30, 32, 33, 35) mindestens die Angriffsfläche (32, 33) mit einschließt, und
d) eine Zone (11, 12; 17, 19) der zweiten Oberfläche, die zumindest die Zone (11, 12; 17; 19) dieser einschließt, die während der genannten, relativen Translation in Längsrichtung und in der genannten, bestimmten Relativlage in Berührung mit der Angriffsfläche (32, 33) gelangt, mit einem Glasierungsmaterial (37, 137) in flüssigem Zustand imprägniert, das dazu imstande ist, unter Bildung einer glatten Haut festzuwerden und auszuhärten, und dann das Abbinden und Aushärten des Glasierungsmaterials (37, 137) ermöglicht oder hervorruft.

2. Verfahren nach Anspruch 1, **dadurch gekennzeichnet, daß** die genannte Haut (36, 136) eine andere Oberflächenzone (29, 28, 31, 35) der Garnitur (3, 103) außer Eingriff läßt, wobei die genannte andere Oberflächenzone (29, 28, 31, 35) in Berührung mit der ersten Oberfläche (Nut 18, 118) gesetzt wird.

3. Verfahren nach Anspruch 1, **dadurch gekennzeichnet, daß** die genannte Haut (36, 136) die Garnitur (3, 103) insgesamt abdeckt.

4. Verfahren nach einem der Ansprüche 1 bis 3, **dadurch gekennzeichnet, daß** die Garnitur (3, 103) auf der ersten Oberfläche (19, 11) durch ein Verfahren zurückgehalten wird, das aus einer Gruppe ausgewählt ist, die die unbewegliche Festlegung durch Reibung, die mechanische Verankerung und die Verklebung umfaßt.

5. Verfahren nach einem der Ansprüche 1 bis 4, **dadurch gekennzeichnet, daß** man den Schritt c) durch ein Verfahren ausführt, das aus einer Gruppe ausgewählt ist, die das Aufbringen eines vorgefertigten Bandes des genannten, festen Gleitmaterials, die Koextrusion mit der Garnitur (3, 103), das Aufstäuben auf diese und deren Tauchbeschichtung umfaßt.

6. Verfahren nach einem der Ansprüche 1 bis 5, **dadurch gekennzeichnet, daß** das Glasierungsmaterial ein polymerisierbares Harz ist, das aus einer Gruppe ausgewählt ist, die die Epoxidharze und Acrylharze umfaßt.

7. Verfahren nach einem der Ansprüche 1 bis 6, **dadurch gekennzeichnet, daß** man die genannte Zone (11, 12; 17, 19) der zweiten Oberfläche (11, 12; 17, 19) bis zur Sättigung mit dem Glasierungsmaterial imprägniert, wobei man eine Glasierungshaut bildet.

8. Verfahren nach einem der Ansprüche 1 bis 7, **dadurch gekennzeichnet, daß** das feste Gleitmaterial aus einer Gruppe ausgewählt wird, die PTFE umfaßt, und daß die Haut eine Dicke in der Größenordnung von maximal einigen Zehntelmillimetern aufweist.

9. Verfahren nach einem der Ansprüche 1 bis 8, **dadurch gekennzeichnet, daß** das erste und zweite Teil (2, 5) Rohre oder dergleichen sind, von denen ein Ende (1, 4) die erste (17, 19) bzw. zweite (11, 13) Oberfläche bildet, die eine Ringform aufweist, und daß die Garnitur (3, 103) und die Haut (36, 136) aus festem Gleitmaterial jeweils die Form eines durchgehenden Ringes aufweist.

10. Teil zum Durchführen des Verfahrens nach einem der Ansprüche 1 bis 9, besonders ein Rohr oder dergleichen, das eine erste, längsverlaufende Oberfläche (19, 11) zum Abdecken einer zweiten, längsverlaufenden Oberfläche (11, 19) eines anderen Teils (5) aufweist, insbesondere eines Rohres oder dergleichen, wobei die genannte erste Oberfläche (19, 11) fest eine Garnitur, insbesondere eine Dichtung (3, 103), einer auf Druck und/oder Biegung elastisch verformbaren Art, insbesondere aus natürlichem oder synthetischen Gummi, trägt, die eine Fläche (32, 33) zum Angriff durch die zweite Oberfläche (11, 19) während einer relativen Längstranslation beim gegenseitigen Zusammenbau der beiden Teile (2, 5) aufweist und in der Lage ist, sich elastisch zu verformen,
**dadurch gekennzeichnet, daß** eine Oberflächenzone (30, 32, 33, 35) der Garnitur (3, 103) mit einer weichen Haut (36, 136) aus einem festen Gleitmaterial verkleidet ist, wobei die genannte Oberflächenzone (30, 32, 33, 35) wenigstens die Angriffszone (32, 33) umfaßt.

11. Teil nach Anspruch 10, **dadurch gekennzeichnet, daß** die genannte Haut (36, 136) eine andere Oberflächenzone (29, 28, 31, 35) der Garnitur (3, 103) außer Eingriff läßt, wobei die genannte, andere Oberflächenzone (29, 28, 31, 35) in Berührung mit der ersten Oberfläche (Nut 18, 118) angeordnet ist.

12. Teil nach Anspruch 10, **dadurch gekennzeichnet, daß** die genannte Haut (36, 136) insgesamt die Garnitur (3, 103) abdeckt.

13. Teil nach einem der Ansprüche 10 bis 12, **dadurch gekennzeichnet, daß** die Garnitur (3, 103) auf der ersten Oberfläche (19, 11) durch ein Verfahren gehalten ist, das aus einer Gruppe ausgewählt ist, die die Festlegung durch Reibung, die mechanische Verankerung und die Verklebung umfaßt.

14. Teil nach einem der Ansprüche 10 bis 13, **dadurch gekennzeichnet, daß** das feste Gleitmaterial aus einer Gruppe ausgewählt ist, die PTFE umfaßt, und daß die Haut eine Dicke in der Größenordnung von maximal einigen Zehntelmillimetern aufweist.

15. Teil nach einem der Ansprüche 10 bis 14, **dadurch gekennzeichnet, daß** es ein Rohr oder dergleichen ist, von dem ein Ende (1, 4) die erste (17, 19) Oberfläche bildet, die eine Ringform aufweist, und daß die Garnitur (3, 103) und die Haut (36, 136) aus festem Gleitmaterial jeweils die Form eines durchgehenden Ringes aufweist.

16. Teil zur Durchführung des Verfahrens nach einem der Ansprüche 1 bis 9, besonders ein Rohr oder dergleichen, das eine zweite, längsverlaufende Oberfläche (11, 19) zur Abdeckung einer ersten, längsverlaufenden Oberfläche (19, 11) eines anderen Teils (5) aufweist, insbesondere eines Rohres oder dergleichen, wobei wenigstens die zweite Oberfläche (11, 19) rauh ist, besonders durch ein poröses Material wie Beton dargestellt ist, und dazu eingerichtet ist, auf einer Angriffsfläche (32, 33) einer Garnitur (3, 11), insbesondere einer Dichtung, zur Auflage zu kommen, die fest von der ersten Oberfläche (19, 11) getragen ist, und zwar während einer längsverlaufenden Translation zum gegenseitigen Zusammenbau der beiden Teile (2, 5), **dadurch gekennzeichnet, daß** eine Zone (11, 12, 17, 19) der zweiten Oberfläche, die mindestens deren Zone (11, 12, 17, 19) umfaßt, die in Berührung mit der ersten Oberfläche (19, 11) gelangt, mit einem Glasierungsmaterial (37, 137) imprägniert ist, das eine glatte und harte Haut bildet.

17. Teil nach Anspruch 10, **dadurch gekennzeichnet, daß** das Glasierungsmaterial ein polymerisierbares Harz ist, das aus einer Gruppe ausgewählt ist, die die Epoxidharze und die Acrylharze umfaßt.

18. Teil nach einem der Ansprüche 16 und 17, **dadurch gekennzeichnet, daß** die genannte Zone (11, 12, 17, 19) der zweiten Oberfläche (11, 12, 17, 19) bis zur Sättigung mit dem Glasierungsmaterial imprägniert ist, das die glatte und harte Haut bildet.

19. Teil nach einem der Ansprüche 16 bis 18, **dadurch gekennzeichnet, daß** es ein Rohr oder dergleichen ist, von dem ein Ende (1, 4) die zweite (17, 19) Oberfläche bildet, die eine Ringform aufweist.
